## Europäisches Patentamt
## European Patent Office
## Office européen des brevets

(19)

(11) Numéro de publication : **0 351 289 B1**

(12) # FASCICULE DE BREVET EUROPEEN

(45) Date de publication du fascicule du brevet :
**30.09.92 Bulletin 92/40**

(51) Int. Cl.⁵ : **B65B 9/04,** B65B 47/02,
B29C 51/22, B29C 51/16

(21) Numéro de dépôt : **89401939.7**

(22) Date de dépôt : **06.07.89**

(54) **Machine de conditionnement en continu de produits en particulier alimentaires ou pharmaceutiques, dans des récipients en matière plastique.**

(30) Priorité : **13.07.88 FR 8809533**

(43) Date de publication de la demande :
**17.01.90 Bulletin 90/03**

(45) Mention de la délivrance du brevet :
**30.09.92 Bulletin 92/40**

(84) Etats contractants désignés :
**DE ES GB IT**

(56) Documents cités :
**EP-A- 0 265 599
FR-A- 2 308 484
US-A- 4 662 149**

(73) Titulaire : **A.R.C.I.L.
4 Avenue de l'Europe
F-78400 Chatou (FR)**

(72) Inventeur : **Vicq, Jean-Marie
47 Boulevard Saint-Michel
F-75005 Paris (FR)**

(74) Mandataire : **Ramey, Daniel et al
Cabinet Ores 6 Avenue de Messine
F-75008 Paris (FR)**

EP 0 351 289 B1

Jouve, 18, rue Saint-Denis, 75001 PARIS

## Description

L'invention concerne une machine de conditionnement en continu de produits, en particulier alimentaires ou pharmaceutiques dans des récipients en matière plastique comme décrit dans la première partie de la revendication 1. Une telle machine est connue du US-A-4 662 149.

On connaît déjà des machines de ce type, dans lesquelles les récipients sont réalisés par thermoformage d'un film de matière plastique, reçoivent une ou des doses de produits, sont fermés par soudure ou collage sur leur face supérieure d'un film de matière telle que de l'aluminium, un papier métallisé ou une matière plastique, puis passent dans un poste de découpe pour être séparés les uns des autres ou être groupés par quatre, six, huit ou douze par exemple.

L'inconvénient essentiel de ces machines connues est leur manque d'adaptabilité à un changement de format des récipients. On comprend que, lorsque le film de matière plastique dans lequel sont thermoformés les récipients, est déplacé d'une extrémité à l'autre de la machine, les outillages et/ou accessoires des divers postes de thermoformage, dosage, fermeture, découpe doivent être commandés en synchronisme parfait par rapport aux mouvements du film plastique, et doivent être positionnés exactement par rapport aux récipients formés dans le film. Pour cette raison, les machines connues sont généralement équipées d'un arbre longitudinal de transmission, les divers postes sont positionnés de façon très précise et montés à demeure sur le châssis de la machine, et la synchronisation des outillages avec le défilement du film de matière plastique est réalisée initialement en usine, lors de la construction de la machine. Il en résulte que, lorsqu'il faut modifier la machine en raison par exemple d'un changement de format des récipients ou des groupes de récipients, il ne suffit pas de changer certains outillages ou accessoires tels que les moules de thermoformage, le nombre et l'emplacement des buses de dosage de produits, le nombre et l'emplacement des moyens de soudure des opercules, et les lames de découpe, il est encore nécessaire de repositionner les divers postes et de resynchroniser l'ensemble de la machine, ce qui correspond en fait à une reconstruction quasi complète de la machine. Cela ne peut être fait qu'en usine, par du personnel spécialisé, et ces opérations de modification sont extrêmement longues et coûteuses.

L'invention a essentiellement pour objet une machine du type précité, mais qui soit "flexible" et adaptable simplement et rapidement, sur site, à des modifications telles que des changements de format des récipients ou de groupes de récipients, etc...

L'invention a également pour objet une machine du type précité, qui soit plus fiable, plus rapide et plus précise que celles de la technique antérieure.

L'invention propose donc une machine de conditionnement en continu de produits, en particulier alimentaires ou pharmaceutiques, dans des récipients en matière plastique, comprenant un châssis équipé de moyens de prise et de déplacement d'un film de matière plastique d'une extrémité à l'autre de la machine et comportant un poste de thermoformage des récipients, un poste de dosage de produits dans les récipients, un poste de fermeture des récipients et un poste de découpe, caractérisée en ce que le poste de thermoformage des récipients comprend un plateau horizontal recevant deux parties de moules identiques et monté à rotation autour d'un axe vertical entre une position de thermoformage et une position de réception d'éléments de décor des récipients.

Il est en effet classique qu'une bande d'une matière telle que du papier, imprimé sur une face et comprenant une matière thermocollante sur l'autre face, soit placée à l'intérieur de chaque alvéole de moulage, en étant enroulée sur elle-même, pour former un décor et/ou un renforcement de la paroi cylindrique ou annulaire d'un récipient thermoformé en matière plastique. Selon l'invention, les alvéoles de moulage d'une première partie de moule sont garnis de ces éléments de décor ou de renforcement, tandis que des récipients sont thermoformés dans une autre partie de moule. Par rotation du plateau tournant, les alvéoles de moulage garnis des éléments de décor sont amenés dans la position de thermoformage, tandis que ceux dans lesquels des récipients viennent d'être thermoformés, sont amenés dans la position de réception des éléments de décor, en préparation d'une nouvelle opération de thermoformage. Cette disposition permet de diminuer la longueur de la machine, et de réduire la durée d'un cycle de fabrication des récipients et de conditionnement des produits.

Selon une autre caractéristique de l'invention, chaque alvéole de moulage d'une partie de moule est, dans la position de réception des éléments de décor, disposé en regard d'un passage cylindrique dans lequel un élément de décor est enroulé autour d'un piston à déplacement vertical, mobile entre une position de repos dans le passage précité et une position de placement de l'élément de décor dans l'alvéole de moulage.

Selon une autre caractéristique de l'invention, des plaques portent des moyens de positionnement et d'application des éléments de décor sur les parois des alvéoles de moulage sont disposées de part et d'autre de la partie de moule et sont mobiles en translation par rapport à celle-ci, les moyens de positionnement et d'application des éléments de décor étant des troncs de cône coaxiaux aux alvéoles de moulage et ayant des formes identiques à celles des alvéoles et des dimensions légèrement inférieures.

Des conduits formés dans la partie de moule débouchent dans les alvéoles de moulage et sont raccordés en permanence à une source de dépression.

La paroi de l'alvéole de moulage peut aussi comprendre une gorge ou rainure circulaire raccordée à une source de dépression et permettant par aspiration de retenir l'élément de décor appliqué contre elle.

Ainsi, et contrairement à la technique antérieure, l'élément de décor est appliqué uniformément et maintenu contre la paroi de l'avéole de moulage, avant le thermoformage d'un récipient. On évite ainsi tous les problèmes de positionnement de la bande enroulée formant l'élément de décor, de collage dans la zone de recouvrement de ses extrémités et les risques d'amincissement du film de matière plastique dans cette zone. On peut également placer de cette façon un élément de décor dans un récipient à section plus ou moins carrée, ce qui posait de sérieux problèmes dans la technique antérieure.

L'invention sera mieux comprise et d'autres détails, caractéristiques et avantages de celle-ci apparaîtront plus clairement à la lecture de la description qui suit, faite à titre d'exemple en référence aux dessins annexés, dans lesquels :

la figure 1 est une vue schématique en élévation d'une machine selon l'invention ;

la figure 2 est une vue de dessus de cette machine ;

la figure 3 est une vue schématique en coupe transversale verticale d'une partie du poste de thermoformage ;

la figure 4 est une vue schématique en coupe axiale, à plus grande échelle, d'un dispositif de positionnement de décor dans un alvéole de moulage ;

la figure 5 est une vue de dessus de l'alvéole de moulage ;

la figure 6 représente schématiquement, en coupe transversale verticale, une partie des moyens de thermoformage de récipients selon l'invention.

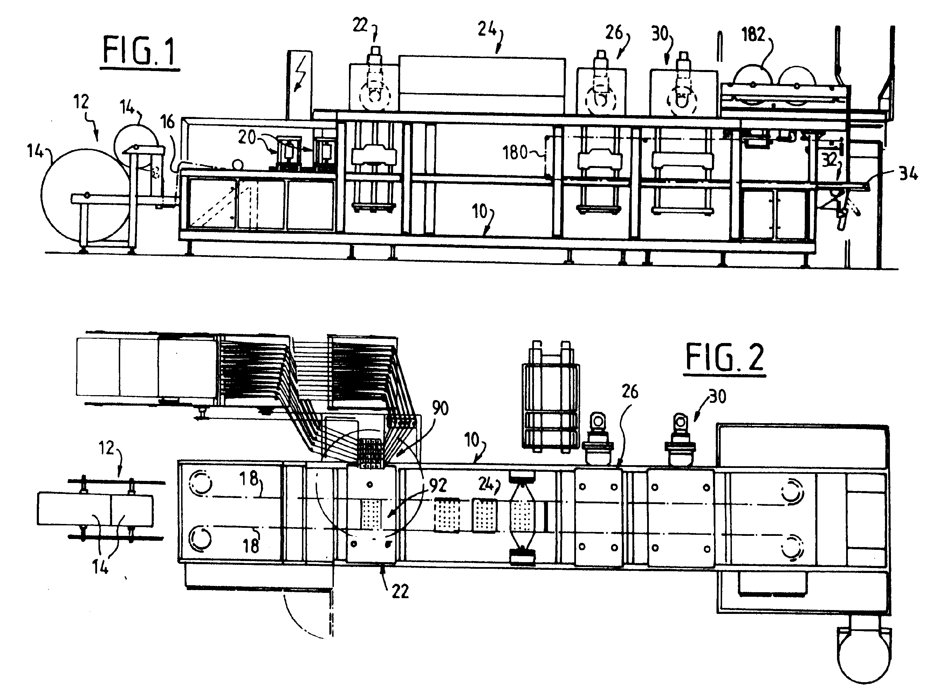

Les figures 1 et 2 sont des vues d'ensemble d'une machine selon l'ivention.

Cette machine comprend, sur toute sa longueur, un chassis 10 à une extrémité duquel se trouve un poste 12 de support et de déroulement de bobines 14 d'un film de matière plastique dans lequel seront thermoformés les récipients. Le transfert d'une bobine 14 de sa position d'attente à sa position de déroulement peut être motorisé, ainsi d'ailleurs que la rotation de la bobine 14 autour de son axe dans sa position de déroulement.

Le film 16 de matière plastique déroulé d'une bobine 14 forme une boucle de réserve à l'entrée du châssis 10, puis est saisi et déplacé vers l'autre extrémité du châssis par des chaînes sans fin parallèles 18, pour passer successivement par des postes de chauffe 20, un poste 22 de positionnement de décor et de thermoformage, un poste 24 de dosage de produits et de remplissage des récipients, un poste 26 de fermeture étanche des récipients, et un poste 30 de découpe des récipients ou de groupes de récipients. Un convoyeur à bandes 32 est prévu en sortie de machine pour évacuer les récipients ou groupes de récipients, et comprend une partie basculante 34 pour l'élimination des récipients mal remplis ou non remplis, commandée par des moyens de détection prévus au poste de dosage des produits. Les divers postes 20, 22, 24, 26, 30 de la machine sont montés déplaçables en translation longitudinale sur le châssis 10 de façon à permettre une modification aisée de la machine pour adaptation à des changements de format des récipients ou des groupes de récipients.

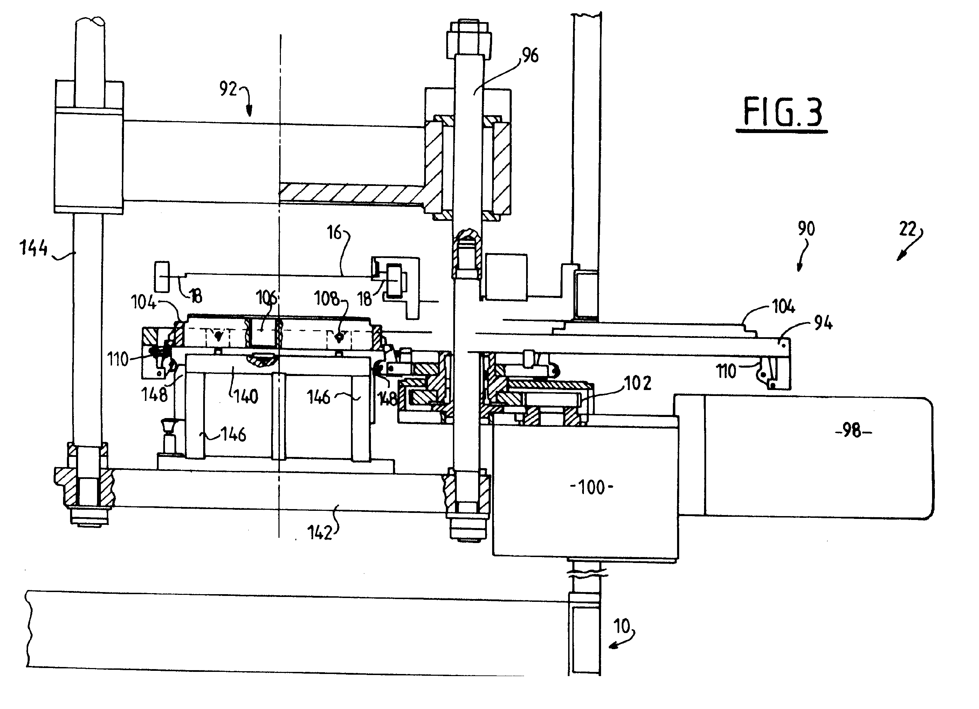

On fera maintenant référence à la figure 3, qui représente une partie importante du poste de thermoformage 22.

Ce poste comprend une partie 90 de positionnement d'éléments de décor dans des alvéoles de moulage, et une partie 92 de thermoformage proprement dit. Un plateau tournant 94 est monté à rotation autour de l'axe d'une colonne verticale 96 et est entraîné à rotation par un moteur 98 associé à un réducteur et à un indexeur 100, dont le mouvement de sortie est transmis au plateau 94 par un train d'engrenage 102.

Le plateau 94 comprend deux orifices de réception d'une partie de moule ou plaque de moulage 104 comprenant un certain nombre (par exemple 24) d'alvéoles de moulage 106 d'axes verticaux, ouverts à leurs deux extrémités. Chaque plaque de moulage 104 comprend sur ses côtés des doigts horizontaux 108 engagés dans des rainures en forme de V des parois latérales du plateau 94. De plus, la base du plateau 94 est équipée de pattes basculantes 110 formant crochets, associées à des ressorts de compression et destinées à s'engager dans des rainures des parois latérales extérieures des plaques de moulage 104, pour les repositionner sur le plateau 94 et empêcher leur rotation par rapport à ce plateau.

Les deux plaques de moulage 104 portées par le plateau 94 sont diamétralement opposées par rapport à l'axe de la colonne 96, de telle sorte qu'une plaque de moulage 104 peut se trouver en position de réception des éléments de décor, tandis que l'autre plaque de moulage est en position de thermoformage.

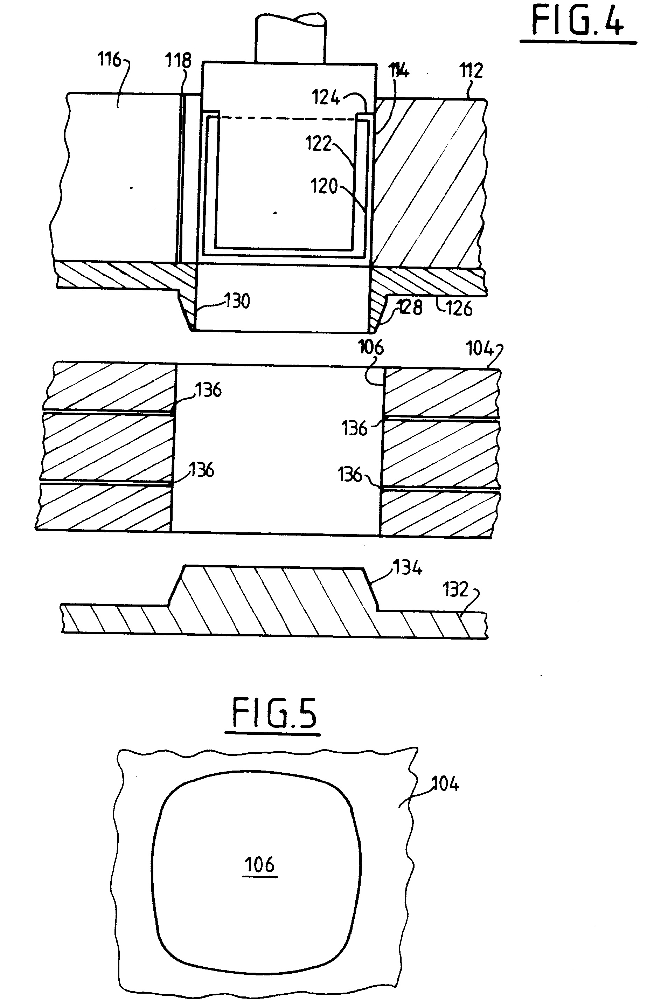

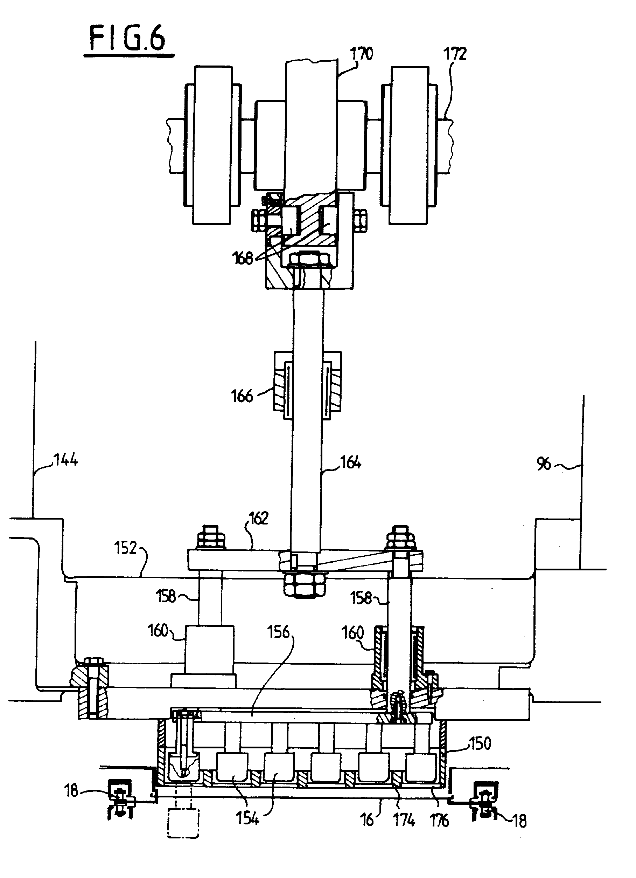

L'introduction des éléments de décor dans les alvéoles de moulage 106, et leur positionnement dans ces alvéoles sont réalisés grâce aux moyens représentés dans les figures 4 et 5.

On a représenté en figure 4 une vue en coupe verticale d'une alvéole 106 d'une plaque 104 se trouvant en position de réception d'éléments de décor, sous une plaque 112 comportant autant de passages cylindriques 114 qu'il y a d'alvéoles de moulage, ou bien entre deux de ces plaques 112 comprenant chacune des passages 114 en nombre égal à la moitié du nombre des alvéoles de moulage 106, en fonction de l'importance de ce nombre. Lorsque la plaque 104 est dans la position 90 de réception des éléments de décor, chaque alvéole 106 est aligné verticalement avec un passage 114 d'une plaque 112, ce passage 114 étant muni d'une fente 116 d'admission d'une bande imprimée formant élément de décor et d'un moyen de coupe, tel qu'une lame mobile 118, d'une longueur déterminée de la bande imprimée. Un tel système est classique et n'a pas à être décrit plus en détail. Il permet d'enrouler sur elle-même une longueur déterminée de bande imprimée à l'intérieur de chaque passage 114.

L'invention prévoit, pour transférer l'élément de décor 120 dans l'alvéole de moulage 106, un piston 122 mobile verticalement dans l'axe de l'alvéole 106 entre une première position où il se trouve dans le passage 114, de sorte que la longueur de bande imprimée formant l'élément de décor 120 peut être enroulée autour de ce piston, et une seconde position où il se trouve à l'intérieur de l'alvéole de moulage 106 après y avoir poussé l'élément de décor 120, au moyen d'un épaulement 124.

Une plaque 126 est interposée entre les plaques 112 et 104 et comprend sur sa face inférieure un tronc de cône 128 orienté vers la plaque 104 et coaxial à l'alvéole de moulage 106. La grande base du tronc de cône 128 a une forme correspondant à celle de l'alvéole 106 et des dimensions inférieures à celles de l'alvéole d'une distance égale à l'épaisseur de l'élément de décor 120 augmentée d'un jeu de 0,2 mm environ. Ce tronc de cône 128 comporte un passage axial cylindrique 130 de passage du piston 122 et de l'élément de décor 120.

Sous la plaque 104 se trouve une autre plaque 132 comportant un tronc de cône 134 coaxial à l'alvéole 106 et orienté vers celui-ci. Le tronc de cône 134 a sensiblement la même forme et les mêmes dimensions que le tronc de cône 128 de la plaque 126.

Des conduits 136 formés dans la plaque 104 débouchent dans l'alvéole 106 et sont raccordés en permanence à une source de dépression.

Les deux plaques 126 et 132 sont mobiles en translation vers la plaque 104. Quand le piston 122 introduit l'élément de décor 120 dans l'alvéole 106, les plaques 126 et 132 sont déplacées vers la plaque 104 et les troncs de cône pénètrent dans l'alvéole 106 et appliquent l'élément de décor 120 sur la paroi de l'alvéole. L'aspiration créée par la dépression dans les conduits 136 maintient l'élément de décor 120 sur la paroi de l'alvéole 106. Dans cette position, les extrémités de l'élément de décor 120 se recouvrent ou se chevauchent partiellement. On est ainsi assuré que l'élément de décor 120 sera plaqué sur toute la surface interne de l'alvéole de moulage 106, ce qui permet, entre autres, de positionner correctement des éléments de décor 120 dans des alvéoles 106 ayant une section transversale sensiblement carrée à sommets arrondis. De plus, le film 16 de matière plastique pourra être thermoformé dans l'alvéole 106, sans avoir à repousser et positionner l'élément de décor 120 dans l'alvéole de moulage. On évitera ainsi toute détérioration de ce film de matière plastique, notamment dans la zone de recouvrement des extrémités de l'élément de décor 120, et tout mauvais collage de l'élément dans cette zone.

Les éléments de décor 120 peuvent être, de façon classique, formés par une feuille de papier dont une face est imprimée et dont l'autre face comprend une couche d'une matière thermocollante. Des bandes de papier imprimé et thermocollé sont amenées aux plaques 112 en nombre égal à celui des alvéoles de moulage, comme on l'a schématiquement représenté en figure 2. Les moyens de guidage de ces bandes sont situés de préférence sur un coté de la machine.

Lorsque les éléments de décor 120 ont été positionnés dans des alvéoles de moulage 106, les pistons 122 sont ramenés dans les passages 114 des plaques 112, les plaques 126 et 132 sont écartées de la plaque 104, et le plateau 94 est entraîné en rotation autour de l'axe de la colonne 96, pour amener la plaque de moulage correspondante 104 au poste 92 de thermoformage proprement dit. Ce poste 92 comprend une contre-plaque horizontale 140, disposée en dessous de la plaque de moulage 104 et portée par une traverse 142 elle-même montée à l'extrémité de la colonne verticale 96 d'une part et à l'extrémité de deux autres colonnes verticales 144, pour être déplaçable en translation verticale (la colonne 96 étant montée à coulissement vertical par rapport au train d'engrenages 102, au moyen d'un palier de type classique).

Les montants 146 reliant la contre-plaque 140 à la traverse horizontale 142 comprennent des rampes inclinées 148 permettant de repousser et de déverrouiller les crochets 110 maintenant la plaque de moulage 104 sur le plateau 94. Ainsi, lorsque la traverse 142 portant la contre-plaque 140 est déplacée vers le haut, les crochets 110 sont déverrouillés par les rampes 148, la contre-plaque 140 vient s'appliquer sous la plaque de moulage 104 et la soulève pour la dégager du plateau 94. Des pions de centrage sont prévus sur la face supérieure de la contre-plaque 140, ainsi qu'au moins un plot électromagnétique solidarisant par attraction magnétique la plaque de moulage 104 et la contre-plaque 140. L'ensemble plaque de moulage-contre-plaque est déplacé vers le haut jusqu'à venir sensiblement au contact du film 16 de matière plastique porté par les chaînes 18. Le thermoformage des récipients est réalisé à l'aide d'un ensemble de poinçons représenté schématiquement en figure 6.

Dans cette figure, on retrouve le film 16 de matière plastique porté par les chaînes 18. Au-dessus du film se trouve une boîte 150 portée par une traverse horizontale 152 guidée en déplacement vertical sur les colonnes 96 et 144. Dans cette boîte sont logés des poinçons 154 en nombre égal à celui des alvéoles de moulage 106, qui sont portés par une plaque horizontale 156, guidée par deux colonnes verticales 158 dans des paliers 160 de la traverse horizontale 152. Une barre horizontale 162 relie les colonnes 158 à une tige verticale 164 elle-même guidée en coulissement vertical dans un palier 166 solidaire du châssis du poste de thermoformage. L'extrémité supérieure de la tige 164 porte deux galets 168, en regard l'un de l'autre, logés dans des chemins de roulement formés dans les deux faces opposées d'une came 170 montée solidaire d'un arbre transversal 172 qui est l'arbre moteur du poste de thermoformage. La rotation de l'arbre 172 se traduit donc, par l'intermédiaire de la came 170 et des galets 168, par un mouvement vertical alternatif des poinçons 164 par rapport à la boîte 150.

La paroi inférieure de la boîte 150 est formée par une plaque 174 comportant des orifices 176 de passage des poinçons 154, dans le prolongement des alvéoles de moulage. La traverse 152 portant la boîte 150 est elle-même déplaçable en mouvement vertical sur les colonnes 96 et 144, de sorte que, en position de thermoformage, la boîte 150 est descendue légèrement jusqu'à venir au contact de la plaque de moulage 104 amenée immédiatement en dessous du film 16 de matière plastique. Celui-ci a été porté à la température voulue par les postes de chauffe 20 prévus en amont du poste de thermoformage 22. Le thermoformage des récipients a lieu par descente des poinçons dans les alvéoles de moulage 106 de la plaque 104, et également par action d'une pression interne d'air comprimé injecté dans ces alvéoles de moulage. La matière plastique s'applique donc étroitement sur la paroi de l'alvéole de moulage 20 (en fait sur l'élément de décor qui est lui-même maintenu contre la paroi de l'alvéole de moulage). La température de la matière plastique provoque le collage de l'élément de décor sur la paroi du récipient thermoformé.

En ce qui concerne le thermoformage, il est particulièrement avantageux que les poinçons 154 soient commandés au moyen d'une came plutôt que par des vérins. L'utilisation d'une came permet en effet d'obtenir le mouvement souhaité de descente des poinçons 154 dans les alvéoles de moulage (mouvement d'abord rapide, puis ralentissant au fur et à mesure de l'allongement et du refroidissement du film de matière plastique). Au contraire, le déplacement des poinçons par un vérin pneumatique sera un mouvement accéléré jusqu'à la fin de course, risquant de produire des déchirures ou des zones de faiblesse du film de matière plastique.

Les alvéoles de moulage sont refroidies par circulation d'eau. Le refroidissement des récipients thermoformés est très rapide. Le démoulage a lieu de la façon suivante : les poinçons 154 sont remontés à l'intérieur de la boîte 150 et celle-ci est relevée au-dessus du film 16 de matière plastique. Simultanément, la contre-plaque 140 portant la plaque de moulage 104 est descendue, et vient déposer la plaque 104 sur le plateau 94. Le mouvement de descente de la contre-plaque 140 est poursuivi jusqu'à ce que les rampes 148 libèrent les crochets 110 qui viennent verrouiller la plaque de moulage 104 sur le plateau 94.

Le film 16 de matière plastique est à nouveau entraîné par les chaînes 18, et les récipients sont transférés au poste de dosage 24 où ils peuvent recevoir des quantités déterminées d'un ou de plusieurs produits en passant par des stations successives de dosage et/ou de remplissage. Les récipients sont ensuite transférés au poste de fermeture 26. De façon classique, celui-ci permet de fixer, par soudure ou par collage surles bords des ouvertures des récipients, un film 180 (figure 1) d'aluminium, de papier métallisé, de matière plastique, etc.. déroulé à partir d'une bobine 182 portée par la partie supérieure du châssis 10 de la machine, ou bien disposée sur le coté du châssis 10, pour réduire les problèmes de manutention des bobines.

Les récipients fermés de façon étanche sont ensuite transférés au poste 30 de découpe pour être séparés les uns des autres, ou bien pour former des ensembles de 2, 4, 6, 8, 12 récipients, par exemple. De préférence, l'invention prévoit de former tout d'abord des découpes en étoile, ou en losange dans les bords de jonction entre récipients, puis , dans un deuxième temps, d'introduire des pions de centrage dans ces découpes, et de former au moyen de lames des lignes de découpe ou de prédécoupe entre récipients, qui passent par les sommets des découpes en losange ou en étoile. Les moyens d'entraînement des chaînes 18, peuvent comprendre un embrayage électromagnétique, désexcité lorsque les pions de centrage sont introduits dans les découpes en losange ou en étoile. On peut ainsi, d'une part, positionner exactement les récipients par rapport aux outils formant les lignes de coupe ou de prédécoupe, et d'autre part, on améliore la précision du positionnement général des récipients le long de toute la machine, toute traction vers l'avant sur un groupe de récipients étant transmise, par le film 16 de matière plastique, aux autres groupes de récipients qui se trouvent aux postes précédents de la machine. On obtient ainsi une précision de positionnement de l'ordre de quelques centièmes de millimètre.

**Revendications**

1.- Machine de conditionnement en continu de produits, en particulier alimentaires ou pharmaceutiques, dans des récipients en matière plastique, comprenant un châssis (10) équipé de moyens (18) de prise et de déplacement d'un film (16) de matière plastique d'une extrémité à l'autre de la machine et comportant un poste (22) de thermoformage des récipients, un poste (24) de dosage de produits dans les récipients, un poste (26) de fermeture des récipients et un poste (30) de découpe, caractérisée en ce que le poste (22) de thermoformage comprend un plateau horizontal (94) recevant deux parties de moules identiques (104) et monté à rotation autour d'un axe vertical entre une position de thermoformage et une position de réception d'éléments (120) de décor des récipients.

2.- Machine selon la revendication 1, caractérisée en ce que le plateau horizontal rotatif (94) comprend des crochets escamotables (110) de centrage et de retenue des parties des moules (104), des moyens (148) étant prévus pour l'escamotage de ces crochets dans la position de thermoformage.

3.- Machine selon la revendication 1 ou 2, caractérisée en ce que chaque partie de moule (104) comprend des alvéoles de moulage (106) ouvertes à leurs extrémités supérieures et inférieures, les fonds des alvéoles étant formés sur une contre-plaque inférieure (140) indépendante du plateau (94) et déplaçable en translation verticale entre une position supérieure où elle porte une partie de moule (104) et permet le thermoformage des récipients, et une position inférieure où la partie de moule (104) est portée par le plateau (94) et peut être amenée par rotation du plateau dans la position de réception des éléments de décor.

4.- Machine selon l'une des revendications 1 à 3 caractérisée en ce que, dans la position de réception des éléments de décor, chaque alvéole de moulage (106) de la partie de moule (104) est disposé en regard d'un passage cylindrique (114) dans lequel un élément de décor (120) est enroulé autour d'un piston (122) à déplacement vertical, mobile entre une position de repos dans le passage (114) et une position de placement de l'élément de décor (120) dans l'alvéole de moulage (106).

5.- Machine selon la revendication 4, caractérisée en ce que des plaques (126, 132) portant des moyens de positionnement et d'application des éléments de décor (120) sur les parois des alvéoles de moulage (106) sont disposées de part et d'autre de la partie de moule (104) et sont mobiles en translation par rapport à celle-ci.

6.- Machine selon la revendication 5, caractérisée en ce que les moyens de positionnement et d'application des éléments de décor (120) sont des troncs de cône coaxiaux aux alvéoles de moulage (106) et ayant des formes identiques à celles des alvéoles et des dimensions légèrement inférieures.

7.- Machine selon l'une des revendications 4 à 6, caractérisée en ce que des conduits (136) formés dans la partie de moule (104) débouchent dans les alvéoles de moulage (106) et sont raccordés en permanence à une source de dépression.

**Patentansprüche**

1. Maschine zum kontinuierlichen Verpacken von Produkten, insbesondere von Nahrungsmitteln oder pharmazeutischen Produkten in Kunststoffbehälter, die einen Rahmen (10) aufweist, der mit Mitteln (18) zum Aufnehmen und Bewegen eines Kunststofffilms (16) von einem Ende der Maschine zum anderen ausgerüstet ist, und eine Stelle (22) zum Warmverformen der Behälter, eine Stelle (24) zur Dosierung der Produkte in die Behälter, eine Stelle (26) zum Verschließen der Behälter und eine Stelle (30) zum Abtrennen aufweist, dadurch gekennzeichnet, daß die Stelle (22) zum Warmverformen eine horizontale Platte (94) aufweist, die zwei identischen Formteile (104) aufnimmt und zwischen einer Stelle zum Warmverformen und einer Stelle zum Anbringen von Verzierungselementen (120) um eine vertikale Achse drehbar montiert ist.

2. Maschine nach Anspruch 1, dadurch gekennzeichnet, daß die drehbare horizontale Platte (94) einziehbare Haken (110) zur Zentrierung und zum Aufsetzen der Formteile (104) aufweist, wobei Mittel (148) zum Einziehen dieser Haken in der Warmverformungsstellung vorgesehen sind.

3. Maschine nach Anspruch 1 oder 2, dadurch gekennzeichnet, daß jeder Formteil (104) an seinem oberen und unteren Ende geöffnete Formgebungszellen (106) aufweist, wobei die untersten Teile der Zellen auf einer unteren Gegenplatte (140) ausgebildet sind, die von der Platte (94) unabhängig und zwischen einer oberen Stellung, wo sie einen Formteil (104) trägt und die Warmverformung der Behälter ermöglicht, und einer unteren Stellung, wo der Formteil (104) von der Platte (94) getragen wird vertikal verschiebbar ist und durch Drehung der Platte in die Stellung zum Anbringen der Verzierungselemente gebracht werden kann.

4. Maschine nach einem der Ansprüche 1 bis 3, dadurch gekennzeichnet, daß jede Formgebungszelle (106) des Formteils (104) in der Stellung zum Anbringen der Verzierungselemente einem zylindrischen Durchgang (114) gegenüber angeordnet ist, in welchem ein Verzierungselement (120) um einen Kolben (122) Verzierungselement (120) zum vertikalen Verschieben gerollt ist, der zwischen einer Ruhestellung in dem Durchgang (114) und einer Stellung zum Anbringen des Verzierungselementes (120) in der Formgebungszelle (106) beweglich ist.

5. Maschine nach Anspruch 4, dadurch gekennzeichnet, daß Platten (126, 132), welche Mittel zum Positionieren und zum Anbringen der Verzierungselemente (120) an den Wänden der Formgebungszelle (106) aufweisen, zu beiden Seiten des Formteils (104) angeordnet und bezüglich diesem verschiebbar sind.

6. Maschine nach Anspruch 5, dadurch gekennzeichnet, daß die Mittel zum Positionieren und zum Anbringen der Verzierungselemente (120) zu den Formgebungszellen (106) koaxiale Kegelstumpfe sind und zu diesen Zellen identische Formen und etwas geringere Abmessungen aufweisen.

7. Maschine nach einem der Ansprüche 4 bis 6, dadurch gekennzeichnet, daß die Leitungen (136), die in dem Formteil (104) ausgebildet sind, in die Formgebungszellen (106) münden und ständig mit einer Unterdruckquelle verbunden sind.

**Claims**

1. A machine for continuously packing products, in particular food or pharmaceutical products, in plastic material containers, comprising a frame (10) equipped with means (18) for taking up and displacing a plastic material film (16) from one end to the other of the machine and comprising a station (22) for thermoforming the containers, a station (24) for introducing predetermined amounts of products into the containers, a station (26) for sealing the containers and a cutting station (30), characterized in that the station (22) thermoforming the containers comprises a horizontal platen (94) receiving two identical mold parts (104) and mounted for rotation about a vertical axis between a thermoforming position and a position for receiving elements (120) for decorating the containers.

2. The machine as claimed in claim 1, characterized in that said rotary horizontal platen (94) comprises retractable hooks (110) for centering and retaining the mold parts (104), means (148) being provided for retracting these hooks in the thermoforming position.

3. The machine as claimed in claim 1 or 2, characterized in that each mold part (104) comprises molding cavities (106) open at their upper and lower ends, the bottoms of the cavities being formed on a lower counter-plate (140) independent of the platen (94) and movable in translation between an upper position in which it carries a mold part (104) and allows thermoforming of the containers and a lower position in which the mold part (104) is carried by the platen (94) and may be brought by rotation of the platen into the decorative element receiving position.

4. The machine as claimed in one of claims 1 to 3, characterized in that each molding cavity (106) of the mold part (104) is, in the decorative element receiving position, disposed opposite a cylindrical passage (114) in which a decorative element (120) is wound about a vertically moving piston (122), movable between a rest position in said passage (114) and a position for placing the decorative element (120) in the molding cavity (106).

5. The machine as claimed in claim 4, characterized in that plates (126, 132) carrying means for positioning and applying the decorative elements (120) on the walls of the molding cavities (106) are disposed on each side of the mold part (104) and are movable in translation with respect thereto.

6. The machine as claimed in claim 5, characterized in that the means for positioning and applying the decorative elements (120) are frustums coaxial with the molding cavities (106) and have shapes identical to those of the cavities and slightly smaller dimensions,

7. The machine as claimed in one of claims 4 to 6, characterized in that ducts (136) formed in the mold part (104) open into the molding cavities (106) and are connected permanently to a depression source.

EP 0 351 289 B1

FIG.2

FIG.1

8

FIG.3

EP 0 351 289 B1

FIG.4

116   118   124   114   112
122
120
130   128   126

106   104
136
136   136
136   136

134   132

FIG.5

104

106

10

## FIG.6